(19) **Europäisches Patentamt** / **European Patent Office** / **Office européen des brevets**

(11) **EP 4 708 023 A1**

(12) # EUROPEAN PATENT APPLICATION

(43) Date of publication:
**11.03.2026 Bulletin 2026/11**

(21) Application number: **25187480.6**

(22) Date of filing: **04.07.2025**

(51) International Patent Classification (IPC):
**G06F 3/16** *(2006.01)* **G10L 15/22** *(2006.01)*
**G06F 21/32** *(2013.01)* **G10L 17/00** *(2013.01)*
**H04L 67/306** *(2022.01)*

(52) Cooperative Patent Classification (CPC):
**G10L 15/22; G06F 3/167;** G06F 21/32; G10L 17/00;
H04L 67/306

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.07.2024 KR 20240088654**

(71) Applicant: **LG Electronics Inc.**
**Yeongdeungpo-gu**
**Seoul 07336 (KR)**

(72) Inventor: **DO, Jiwon**
**Seoul 07796 (KR)**

(74) Representative: **Vossius & Partner**
**Patentanwälte Rechtsanwälte mbB**
**Siebertstrasse 3**
**81675 München (DE)**

(54) **ELECTRONIC DEVICE AND SYSTEM INCLUDING THE SAME**

(57) An electronic device and a system including the same are disclosed. The electronic device according to one embodiment of the present disclosure comprises a display; a memory that stores a usage history; a user input interface that transmits signals corresponding to user inputs; and a controller, wherein the controller checks the user account corresponding to a voice signal when the voice signal is received through the user input interface, determines whether the usage history for the user account is stored in the memory, outputs a preset first recommended query through the display when the user account does not exist or the usage history for the user account does not exists in the memory, and outputs a second recommended query corresponding to the usage history for the user account through the display when the usage history for the user account is stored in the memory.

FIG. 1

**Description**

BACKGROUND OF THE INVENTION

**1. Field of the invention**

The present disclosure relates to an electronic device and a system including the same and more specifically, to an electronic device and a system including the same that utilize speech recognition technology.

**2. Description of the Related Art**

With the recent development of technology, research on speech recognition technology for processing speech is being actively conducted. In particular, research on speech recognition technology, which began with smartphones, is being conducted widely in various fields related to user convenience, such as vehicles, as well as home appliances used at home and in offices.

Speech recognition technology is commonly used when a user controls an electronic device using his or her voice. For example, when a user utters a command to control an electronic device, the electronic device may directly recognize and process user's speech and operate according to the command related to the speech, or may send the speech to a server that processes speech and then operate according to a command related to the speech received from the server.

Meanwhile, services or functions provided through electronic devices are becoming increasingly diverse. Additionally, users register accounts for various services and then use the services by logging in with the registered account. In this case, service providers use user information managed for each account to provide optimal functions or information tailored to the user.

Conventionally, when attempting to log in to use a service, a user needs to directly input account information, for example, an identification (ID) and/or a password of the account. However, it is inconvenient for a user to input account information one by one into various services. Additionally, if a user remains logged in to eliminate the inconvenience of inputting account information, security problems such as access to the user's account information by others may occur. Additionally, when multiple users use one electronic device together, there is a problem that multiple users need to input their account information and log in each time they use a service.

SUMMARY OF THE INVENTION

Therefore, the present disclosure has been made in view of the above problems, and it is an object of the present disclosure to solve the above-described problems and other problems.

Another object of the present disclosure is to provide an electronic device and a system including the same capable of registering identification information on user voice in a user account.

A further object of the present disclosure is to provide an electronic device and a system including the same capable of identifying a user based on user voice.

A further object of the present disclosure is to provide an electronic device and a system including the same capable providing a recommended query optimized for an account of a user identified based on user voice.

To achieve the objects above, an electronic device according to one embodiment of the present disclosure may comprise a display; a memory that stores a usage history; a user input interface that transmits signals corresponding to user inputs; and a controller, wherein the controller checks the user account corresponding to a voice signal when the voice signal is received through the user input interface, determines whether the usage history for the user account is stored in the memory, outputs a preset first recommended query through the display when the user account does not exist or the usage history for the user account does not exists in the memory, and outputs a second recommended query corresponding to the usage history for the user account through the display when the usage history for the user account is stored in the memory.

To achieve the objects above, a system according to one embodiment of the present disclosure may comprise an electronic device and a server, wherein the electronic device transmits data that includes a voice signal to the server when the voice signal is received through a user input interface of the electronic device, checks a user account corresponding to the voice signal based on a result of processing the voice signal received from the server, determines whether a usage history for the user account is stored in a memory of the electronic device, outputs a preset first recommended query through a display of the electronic device when the user account does not exist or the usage history for the user account is not stored in the memory, and outputs a second recommended query corresponding to the usage history for the user account through the display when the usage history for the user account is stored in the memory, wherein the server generates identification information for the voice signal that includes data received from the electronic device, determines predetermined identification information corresponding to the identification information of the voice signal from identification information mapped to user identification information corresponding to a user account, which is stored in a database of the server, and transmits to the electronic device the result of processing the voice signal that includes predetermined user identification information mapped to the predetermined identification information.

In what follows, advantageous effects of an electronic device and a system including the same according to the present disclosure are described.

According to at least one embodiment of the present disclosure, identification information for user voice may be registered to the account of the user.

According to at least one embodiment of the present disclosure, a user may be identified based on the user voice.

According to at least one embodiment of the present disclosure, an optimized recommended query may be provided to the account of the user identified based on user voice.

Additional scope of applicability of the present disclosure will become apparent from the detailed description that follows. However, since various changes and modifications within the scope of the present disclosure may be clearly understood by those skilled in the art, the detailed description and specific embodiments such as preferred embodiments of the present disclosure should be understood as being given only as examples.

## BRIEF DESCRIPTION OF THE DRAWINGS

FIG. 1 is a diagram illustrating a system according to an embodiment of the present disclosure.

FIG. 2 is an internal block diagram of an electronic device of FIG. 1.

FIG. 3 is a diagram referenced in description of a server of FIG. 1.

FIG. 4 is a block diagram illustrating a configuration of a server according to an embodiment of the present disclosure.

FIG. 5 is a diagram illustrating an example of converting a speech signal into a power spectrum according to an embodiment of the present disclosure.

FIG. 6 is a block diagram illustrating the configuration of a controller for speech recognition and synthesis of an electronic device, according to an embodiment of the present disclosure.

FIG. 7 is a flowchart of a method of operating an electronic device according to an embodiment of the present disclosure.

FIG. 8 is a flowchart of a method of operating a system according to an embodiment of the present disclosure.

FIGS. 9 to 13 are diagrams referenced in description of a process of registering identification information on a user voice in a user account according to an embodiment of the present disclosure.

FIG. 14 is a flowchart of a method of operating an electronic device according to an embodiment of the present disclosure.

FIGS. 15 to 19 are diagrams referenced in description of provision of a recommended query according to embodiments of the present disclosure.

FIG. 20 is a flowchart of a method of operating an electronic device according to another embodiment of the present disclosure.

FIGS. 21a and 21b are diagrams referenced in description of provision of a recommended query according to embodiments of the present disclosure.

## DETAILED DESCRIPTION OF THE PREFERRED EMBODIMENTS

Hereinafter, the present disclosure will be described in detail with reference to the attached drawings. In the drawings, parts not related to description are omitted in order to clearly and briefly describe the present disclosure, and identical or extremely similar parts are denoted by the same reference numerals throughout the specification.

The suffixes "module" and "part" for components used in the following description are simply given in consideration of the ease of writing this specification and do not have any particularly important meaning or role. Accordingly, the terms "module" and "part" may be used interchangeably.

In the present disclosure, it will be further understood that the term "comprise" or "include" specifies the presence of a stated feature, figure, step, operation, component, part or combination thereof, but does not preclude the presence or addition of one or more other features, figures, steps, operations, components, or combinations thereof.

Further, in this specification, the terms "first" and/or "second" are used to describe various components, but such components are not limited by these terms. The terms are used to discriminate one component from another component.

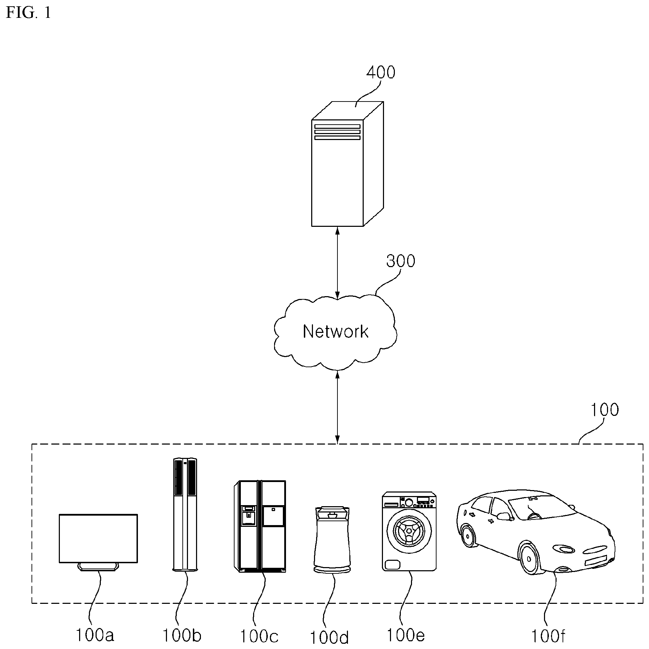

FIG. 1 is a diagram illustrating a system according to various embodiments of the present disclosure.

Referring to FIG. 1, the system 10 may include an electronic device 100 and/or a server 400.

The electronic device 100 may transmit/receive data to/from at least one server 400. For example, the electronic device 100 may transmit/receive data to/from the at least one server 400 via a network 300 such as the Internet.

According to an embodiment, the at least one server 400 may include a server that performs speech recognition, a server that processes data using a super-giant artificial intelligence model, a server that provides content, and the like.

The electronic device 100 may include an image display device 100a, an air conditioner 100b, a refrigerator 100c, an air purifier 100d, a washing machine 100e, a vehicle 100f, and the like. Although the electronic device 100 is an image display device 100a in the present disclosure, the present disclosure is not limited thereto.

The image display device 100a may be a device that processes and outputs images. The image display device 100a is not particularly limited as long as it can output a screen related to video signals, such as a TV, a laptop computer, or a monitor.

The image display device 100a may receive a broadcast signal, process the same, and output a processed broadcast image. When the image display device 100a receives a broadcast signal, the image display device 100a may correspond to a broadcast reception device.

The image display device 100a may receive broadcast signals wirelessly through an antenna, or may receive broadcast signals through a cable. For example, the image display device 100a may receive terrestrial broadcast signals, satellite broadcast signals, cable broadcast signals, and Internet protocol Television (IPTV) broadcast signals.

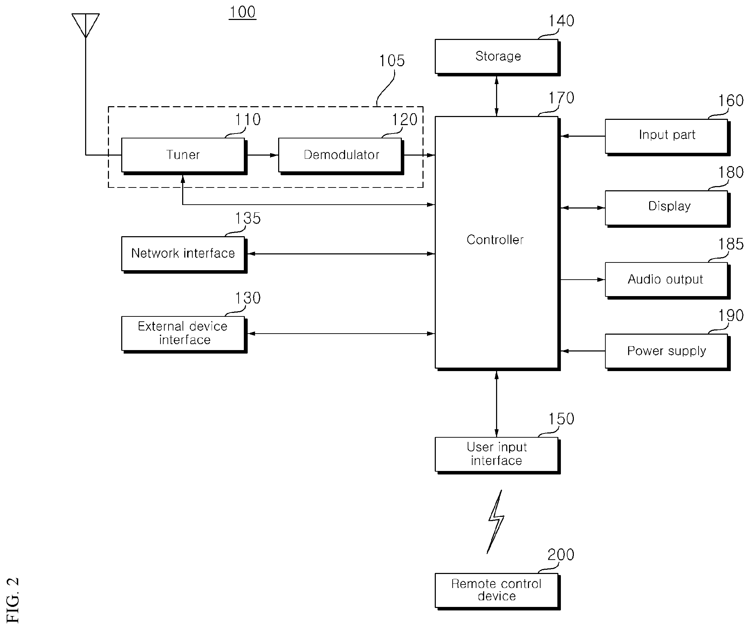

FIG. 2 is an internal block diagram of the electronic device of FIG. 1.

Referring to FIG. 2, the electronic device 100 may include a broadcast receiver 105, an external device interface 130, a network interface 135, a storage 140, a user input interface 150, an input part 160, a controller 170, a display 180, an audio output part 185, and/or a power supply 190.

The broadcast receiver 105 may include a tuner 110 and a demodulator 120.

Meanwhile, the electronic device 100 may include only the broadcast receiver 105 and the external device interface 130 among the broadcast receiver 105, the external device interface 130, and the network interface 135. That is, the electronic device 100 may not include the network interface 135.

The tuner 110 may select a broadcast signal related to a channel selected by a user or broadcast signals of all previously stored channels among broadcast signals received through an antenna (not shown) or a cable (not shown). The tuner 110 may convert the selected broadcast signals into intermediate frequency signals or baseband video or audio signals.

For example, if a selected broadcast signal is a digital broadcast signal, the tuner 110 may convert the selected broadcast signal into a digital IF signal (DIF), and if the selected broadcast signal is an analog broadcast signal, convert the same into an analog baseband video or audio signal (CVBS/SIF). That is, the tuner 110 may process digital broadcast signals or analog broadcast signals. The analog base band video or audio signal (CVBS/SIF) output from the tuner 110 may be directly input to the controller 170.

Meanwhile, the tuner 110 may sequentially select broadcast signals of all of stored broadcast channels through a channel memory function among received broadcast signals and convert the same into intermediate frequency signals or baseband video or audio signals.

The tuner 110 may include a plurality of tuners in order to receive broadcast signals of a plurality of channels. Alternatively, a single tuner that simultaneously receives broadcast signals of a plurality of channels may also be adopted.

The demodulator 120 may receive a digital IF signal (DIF) converted by the tuner 110 and perform a demodulation operation.

The demodulator 120 may output a stream signal TS after performing demodulation and channel decoding. Here, the stream signal may be a multiplexed video signal, audio signal, or data signal.

The stream signal output from the demodulator 120 may be input to the controller 170. After performing demultiplexing and video/audio signal processing, the controller 170 may output video through the display 180 and output audio through the audio output part 185.

The external device interface 130 may transmit/receive data to/from a connected external device. To this end, the external device interface 130 may include an A/V input/output part (not shown).

The external device interface 130 may be connected to external devices such as a digital versatile disc (DVD) player, a Blu-ray player, a game console, a camera, a camcorder, a computer (laptop), a set-top box, and the like in wired/wireless manners, and may also perform input/output operations with respect to external devices.

In addition, the external device interface 130 may establish a communication network with respect to various remote control devices 200 to receive control signals related to the operation of the electronic device 100 from the remote control devices 200 or to transmit data related to the operation of the electronic device 100 to the remote control devices 200.

The A/V input/output part may receive video and audio signals from an external device. For example, the A/V input/output part may include an Ethernet terminal, a USB terminal, a composite video banking Sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, and the like. Digital signals input through these terminals may be transmitted to the controller 170. Here, analog signals input through the CVBS terminal and the S-video terminal may be converted into digital signals through an analog-to-digital converter (not shown) and transmitted to the controller 170.

The external device interface 130 may include a wireless communication part (not shown) for short-distance wireless communication with other electronic devices. The external device interface 130 may exchange data with a neighboring mobile terminal through the wireless communication part. For example, the external device interface 130 may receive device information, executing application information, application images, and the like from the mobile terminal in a mirroring mode.

The external device interface 130 may perform short-range wireless communication using Bluetooth, radio frequency identification (RFID), infrared data association (IrDA), ultra-wideband (UWB), ZigBee, and the like.

The network interface 135 may provide an interface for connecting the electronic device 100 to a wired/wireless network including the Internet.

The network interface 135 may include a communication module (not shown) for connection to a wired/wireless network. For example, the network interface 135 may include a communication module for a wireless LAN (WLAN) (Wi-Fi), wireless broadband (WiBro), world interoperability for microwave access (WiMax), and high speed downlink packet access (HSDPA).

The network interface 135 may transmit/receive data to/from other users or other electronic devices through a connected network or another network linked to the connected network.

The network interface 135 may receive web content or data provided by content providers or network operators. That is, the network interface 135 may receive content such as movies, advertisements, games, VOD, and broadcasting and information related thereto provided from content providers or network providers through networks.

The network interface 135 may receive firmware update information and update files provided by network operators, and may transmit data to the Internet, content providers, or network operators.

The network interface 135 may select and receive a desired application from among applications open to the public through a network.

The storage 140 may store programs for processing and controlling each signal in the controller 170 and may store processed video, audio, or data signals. For example, the storage 140 may store application programs designed for the purpose of performing various tasks that may be processed by the controller 170 and selectively provide some of the stored application programs at the request of the controller 170.

Programs stored in the storage 140 are not particularly limited as long as they can be executed by the controller 170.

The storage 140 may execute a function of temporarily storing video, voice, or data signals received from an external device through the external device interface 130.

The storage 140 may store information on a predetermined broadcast channel through a channel memory function such as a channel map.

Although FIG. 2 illustrates an embodiment in which the storage 140 is provided separately from the controller 170, the scope of the present disclosure is not limited thereto, and the storage 140 may be included in the controller 170.

The storage 140 may include at least one of a volatile memory (e.g., a DRAM, an SRAM, an SDRAM, etc.) or a non-volatile memory (e.g., a flash memory, a hard disk drive (HDD), a solid-state drive (SSD), etc.). In various embodiments of the present disclosure, "storage" and "memory" may be used interchangeably.

The user input interface 150 may transmit a signal input by a user to the controller 170 or transmit a signal from the controller 170 to the user.

For example, the user input interface 150 may transmit/receives user input signals such as power on/off, channel selection, and screen settings to/from the remote control device 200, transmit user input signals input through local keys (not shown) such as a power key, a channel key, a volume key, and a setting key to the controller 170, transmit a user input signal input through a sensor (not shown) that senses a user's gesture to the controller 170, or transmit signals from the controller 170 to the sensor.

The input part 160 may be provided on one side of the main body of the electronic device 100. For example, the input part 160 may include a touch pad, physical buttons, and the like.

The input part 160 may receive various user commands related to the operation of the electronic device 100 and transmit control signals related to the input commands to the controller 170.

The input part 160 may include at least one microphone (not shown) and may receive a user voice through the microphone.

The controller 170 may include at least one processor and may control the overall operation of the electronic device 100 using the processor included therein. Here, the processor may be a general processor such as a central processing unit (CPU). The processor may be a dedicated device such as an ASIC or another hardware-based processor.

The controller 170 may demultiplex streams input through the tuner 110, the demodulator 120, the external device interface 130, or the network interface 135, or process demultiplexed signals to generate and output signals for video or audio output.

The display 180 may convert a video signal, a data signal, an OSD signal, and a control signal processed by the controller 170 or a video signal, a data signal, and a control signal received from the external device interface 130 to generate driving signals.

The display 180 may include a display panel (not shown) having a plurality of pixels.

The plurality of pixels provided in the display panel may include RGB subpixels. Alternatively, the plurality of pixels provided in the display panel may include RGBW subpixels. The display 180 may convert a video signal, a data signal, an OSD signal, a control signal, etc. processed by the controller 170 to generate driving signals for the plurality of pixels.

The display 180 may be a plasma display panel (PDP), a liquid crystal display (LCD), an organic light emitting diode (OLED) display, or a flexible display, and may also be a 3D display. 3D displays 180 may be classified into a glasses-free type and a glasses type.

Meanwhile, the display 180 may be configured as a touch screen and used as an input device in addition to an output device.

The audio output part 185 receives the audio signal processed by the controller 170 and outputs the same as audio.

A video signal processed by the controller 170 may be input to the display 180 and displayed as an image related to the video signal. Additionally, the video signal processed by the controller 170 may be input to an external output device through the external device interface 130.

An audio signal processed by the controller 170 may be output as sound to the audio output part 185. Additionally, the audio signal processed by the controller 170 may be input to an external output device through the external device interface 130.

Although not illustrated in FIG. 2, the controller 170 may include a demultiplexer, an image processor, etc.

In addition, the controller 170 may control overall operations of the electronic device 100. For example, the controller 170 may control the tuner 110 to select (tune to) a broadcast related to a channel selected by the user or a previously stored channel.

Additionally, the controller 170 may control the electronic device 100 using a user command input through the user input interface 150 or an internal program.

Meanwhile, the controller 170 may control the display 180 to display an image. Here, the image displayed on the display 180 may be a still image or a video, and may be a 2D image or a 3D image.

Further, the controller 170 may cause a predetermined 2D object to be displayed in an image displayed on the display 180. For example, the object may be at least one of a connected web screen (newspaper, magazine, or the like), an electronic program guide (EPG), various menus, widgets, icons, a still image, a video, or text.

Meanwhile, the electronic device 100 may further include an imaging device (not shown). The imaging device may capture an image of the user. The imaging device may be implemented as a single camera, but the present disclosure is not limited thereto and the imaging device may also be implemented as a plurality of cameras. Meanwhile, the imaging device may be embedded in the electronic device 100 at the top of the display 180 or may be disposed separately. Image information captured by the imaging device may be input to the controller 170.

The controller 170 may recognize a location of the user based on images captured by the imaging device. For example, the controller 170 may ascertain the distance (z-axis coordinate) between the user and the electronic device 100. In addition, the controller 170 may ascertain the x-axis coordinate and y-axis coordinate in the display 180 related to the location of the user.

The controller 170 may detect a user's gesture based on images captured by the imaging device, each signal detected by a sensor, or a combination thereof.

The power supply 190 may supply corresponding power throughout the electronic device 100. In particular, the power supply 190 may supply power to the controller 170, which may be implemented in the form of a system on chip (SOC), the display 180 for displaying images, and the audio output part 185 for audio output.

Specifically, the power supply 190 may include a converter (not shown) that converts AC power to DC power and a DC/DC converter (not shown) that converts a DC power level.

The remote control device 200 may transmit user input to the user input interface 150. To this end, the remote control device 200 may use Bluetooth, radio frequency (RF) communication, infrared communication, ultra-wideband (UWB), ZigBee, and the like. Additionally, the remote control device 200 may receive video, audio, or data signals output from the user input interface 150 and display the same or output the same as audio through the remote control device 200.

The electronic device 100 described above may be a stationary or mobile digital broadcast receiver capable of receiving digital broadcasting.

Meanwhile, the block diagram of the electronic device 100 shown in FIG. 2 is merely a block diagram for an embodiment of the present disclosure, and components of the block diagram may be integrated, added, or omitted according to the specifications of the electronic device 100 that is actually implemented.

That is, two or more components may be combined into one component, or one component may be subdivided into two or more components as necessary. In addition, the function executed by each block is for describing an embodiment of the present disclosure, and the specific operation or device does not limit the scope of the present disclosure.

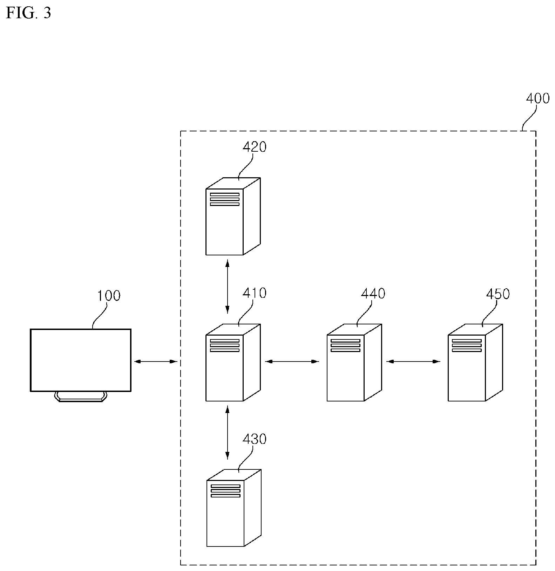

FIG. 3 is a diagram referenced in description of the server of FIG. 1.

Referring to FIG. 3, the server 400 may include a relay server 410, a speech-to-text (STT) server 420, a natural language processing (NLP) server 430, a user identification server 440, and/or an account server 450. Although the relay server 410, the STT server 420, the NLP server 430, the user identification server 440, and the account server 450 are distinguished from each other in the present disclosure, the present disclosure is not limited thereto. For example, two or more of the relay server 410, the STT server 420, the NLP server 430, the user identification server 440, and the account server 450 may be configured as one server.

The relay server 410 may communicate with the electronic device 100. The relay server 410 may transmit data between the STT server 420, the NLP server 430, the user identification server 440, and the electronic device 100. The relay server 410 may store at least some data transmitted between the STT server 420, the NLP server 430, the user identification server 440, and the electronic device 100.

The STT server 420 may receive audio data. The STT server 420 may convert the audio data into text data. The STT server 420 may transmit the text data to the electronic device 100 via the relay server 410. The STT server 420 may be called an automatic speech recognition (ASR) server.

The STT server 420 may increase the accuracy of speech-to-text conversion using a language model. A language model may refer to a model that may calculate the probability of a sentence or the probability of the next word appearing when previous words are provided. For example, the language model may include probabilistic language models such as Unigram model, Bigram model, and N-gram model. That is, the STT server 420 may determine whether text data has been appropriately converted from audio data, and accordingly, increase the accuracy of conversion to text data.

The NLP server 430 may receive text data. The NLP server 430 may perform intent analysis on the text data based on the received text data. The NLP server 430 may transmit intent analysis information indicating the result of intent analysis to the electronic device 100 via the relay server 410.

According to an embodiment, the NLP server 430 may generate intent analysis information by sequentially performing a morpheme analysis step, a syntax analysis step, a speech-act analysis step, a conversation processing step, and the like on text data. The morpheme analysis step is a step of classifying text data related to speech uttered by a user into morpheme units, which are the smallest units with meaning, and determining to what part of speech each classified morpheme corresponds. The syntax analysis step is a step of classifying text data into noun phrases, verb phrases, adjective phrases, and the like using the results of the morpheme analysis step and determining what kind of relationship is present between the classified phrases. Through the syntax analysis step, subjects, objects, and modifiers of speech uttered by a user may be determined. The speech-act analysis step is a step of analyzing the intention of speech uttered by a user using the results of the syntax analysis step. Specifically, the speech-act analysis step is a step of determining the intention of a sentence, such as whether a user is asking a question, making a request, or simply expressing an emotion. The conversation processing step is a step of determining whether to reply to user's utterance, respond thereto, or ask a question for additional information.

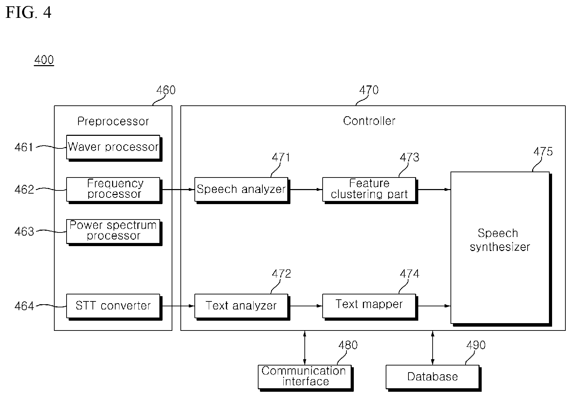

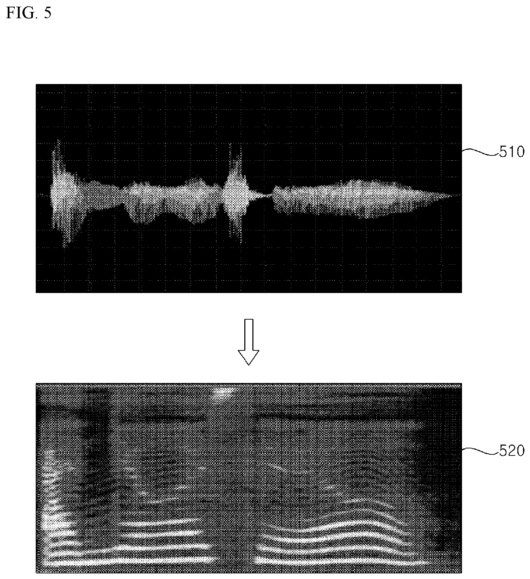

The user identification server 440 may receive audio data. The user identification server 440 may extract voice features based on the audio data. Here, the voice features may include the waveform of the voice, the frequency band of the voice, the power spectrum of the voice, and the like. Extraction of voice features will be described later with reference to FIG. 4 and FIG. 5.

The user identification server 440 may obtain a voice feature vector from the voice features. The user identification server 440 may obtain the voice feature vector from the voice features based on a linear predictive coefficient, cepstrum, Mel frequency cepstral coefficient (MFCC), and filter bank energy.

The user identification server 440 may determine a similarity between a plurality of feature vectors. The user identification server 440 may determine the similarity between the plurality of feature vectors using cosine similarity, Euclidean similarity, or the like. Although an example of calculating a similarity between a first voice input and a second voice input based on cosine similarity will be described in the present disclosure, the method of determining a similarity is not limited thereto. For example, a first vector related to first text and a second vector related to second text may be created. A cosine similarity between the first vector and the second vector may be calculated based on Formula 1 below.

[Formula 1]

$$\sqrt{\sum_{i=1}(A_i)^2} \times \sqrt{\sum_{i=1}(B_i)^2}$$

Here, A·B indicates the dot product of two vectors, an ‖A‖ and ‖B‖ indicate the magnitudes of the two vectors. That is, cosine similarity may be calculated by dividing the dot product of two vectors by the product of the magnitudes of the vectors. Cosine similarity may range from -1 to 1, and two vectors are determined to be similar as the cosine similarity therebetween is closer to 1.

The user identification server 440 may determine whether users who have uttered speech are the same based on the similarity between a plurality of feature vectors. For example, when a similarity between a first feature vector related to the first voice input and a second feature vector related to the second voice input is equal to or greater than a predetermined standard, the user identification server 440 may determine that the user who has uttered the first voice input and the user who has uttered the second voice input are the same.

According to an embodiment, the user identification server 440 may obtain a vector by processing a voice feature vector using an algorithm such as the Gaussian mixture model (GMM), supervector, i-vector, d-vector, x-vector, or the like. The user identification server 440 may determine whether users who have uttered voices are the same based on a similarity between a first vector obtained by processing a first feature vector and a second vector obtained by processing a second feature vector.

The user identification server 440 may store audio data. The user identification server 440 may store data on voiceprint (hereinafter, voiceprint information). Here, voiceprint information may include a voice feature vector and/or a vector obtained by processing the voice feature vector.

The user identification server 440 may store a voice database. The voice database regarding voices may include unique identification information related to the electronic device 100 (hereinafter referred to as device identification information), unique identification information related to a user account (hereinafter referred to as user identification information), voice data mapped to user identification information, voiceprint information mapped to user identification information.

The device identification information, user identification information, audio data, and voiceprint information included in the voice database may be stored in the user identification server 440 in association with one another. For example, at least one piece of device identification information, a plurality of pieces of audio data, and/or a plurality of pieces of voiceprint information may be mapped to user identification information. That is, it may be interpreted that device identification information, audio data, and voiceprint information are mapped to a user account and stored in the user identification server 440. In the present disclosure, an example in which a plurality of pieces of audio data and a plurality of pieces of voiceprint information are all mapped to user identification information included in the voice database will be described.

The user identification server 440 may update voiceprint information included in a voice database based on audio data included in the voice database. For example, the user identification server 440 may generate voiceprint information related to audio data included in the voice database using an algorithm different from a previously used algorithm. Here, the user identification server 440 may change the voiceprint information included in the voice database to the newly generated voiceprint information.

The account server 450 may manage data regarding user accounts. The account server 450 may manage user account IDs, passwords, user identification information, device identification information mapped to user accounts, and whether or not users agree to terms and conditions related to various functions.

The account server 450 may store a database regarding user accounts. The database regarding user accounts may include user account IDs, passwords, user identification information, device identification information mapped to the user accounts, registration dates and times of the user accounts, whether or not users agree to terms and conditions related to various functions, and dates and times when users agree to the terms and conditions.

The account server 450 may communicate with the electronic device 100. For example, the account server 450 may create and register a user account based on data from the electronic device 100. For example, the account server 450 may approve login of a user account based on an ID and a password received from the electronic device 100.

FIG. 4 is a block diagram for describing the configuration of the server according to an embodiment of the present disclosure.

Referring to FIG. 4, the server 400 may include a preprocessor 460, a controller 470, a communication interface 480, and/or a database 490.

The preprocessor 460 may preprocess speech received through the communication interface 480 or speech stored in the database 490.

The preprocessor 460 may be implemented as a separate chip from the controller 470 or may be implemented as a chip included in the controller 470.

The preprocessor 460 may receive a voice signal (uttered by a user) and filter noise signals from the voice signal before converting the received voice signal into text data.

If the preprocessor 460 is provided in the electronic device 100, the preprocessor 460 may recognize a startup word for activating speech recognition of the electronic device 100. The preprocessor 460 may convert the startup word received through the user input interface 150 into text data, and if the converted text data is text data related to a pre-stored startup word, determine that the startup word is recognized.

The preprocessor 460 may convert the noise-removed voice signal into a power spectrum.

A power spectrum may be a parameter that indicates a frequency component included in a temporally varying waveform of a voice signal and the magnitude of the frequency component.

A power spectrum shows a distribution of squared amplitude values according to the frequency of the waveform of a voice signal. This will be described with reference to FIG. 5.

FIG. 5 is a diagram illustrating an example of converting a voice signal into a power spectrum according to an embodiment of the present disclosure.

FIG. 5 shows a voice signal 510. The voice signal 510 may be a signal received from an external device or may be a signal previously stored in the memory 170.

The x-axis of the voice signal 510 represents time, and the y-axis represents amplitude.

A power spectrum processor 463 may convert the voice signal 510 in which the x-axis is the time axis into a power spectrum 520 in which the x-axis is the frequency axis. The power spectrum processor 463 may convert the voice signal 510 into the power spectrum 520 using Fast Fourier transform (FFT). The x-axis of the power spectrum 520 represents frequency, and the y-axis represents the square of amplitude.

Referring back to FIG. 4, the functions of the preprocessor 460 and the controller 470 described in FIG. 4 may also be performed in the NLP server 430.

The preprocessor 460 may include a wave processor 461, a frequency processor 462, the power spectrum processor 463, a speech-to-text (STT) converter 464, and the like.

The wave processor 461 may extract the waveform of speech.

The frequency processor 462 may extract the frequency band of the speech.

The power spectrum processor 463 may extract the power spectrum of the speech.

A power spectrum may be a parameter that indicates, when a temporally varying waveform is given, a frequency component included in the waveform and the magnitude of the frequency component.

The STT converter 464 may convert speech into text. The STT converter 464 may convert speech in a specific language into text in that language.

The controller 470 may control the overall operation of the server 400. The controller 470 may include a speech analyzer 471, a text analyzer 472, a feature clustering part 473, a text mapper 474, and/or a speech synthesizer 475.

The speech analyzer 471 may extract speech characteristic information using one or more of the waveform of speech, the frequency band of the speech, and the power spectrum of the speech preprocessed in the preprocessor 460. The speech characteristic information may include one or more of information on the sex of a speaker, the voice (or tone) of the speaker, the pitch of voice, the speaking style of the speaker, the speech rate of the speaker, and the emotion of the speaker. Additionally, the speech characteristic information may further include the timbre of the speaker.

The text analyzer 472 may extract main expressions from text converted by the STT converter 464. Upon detecting a change in tone between phrases from the converted text, the text analyzer 472 may extract the phrase with a different tone as a main expression phrase. The text analyzer 472 may determine that the tone has changed when the frequency band between phrases has changed more than a preset band. The text analyzer 472 may extract key words from phrases in the converted text. A key word may be a noun present in a phrase, but this is merely an example.

The feature clustering part 473 may classify the speech type of the speaker using the speech characteristic information extracted by the speech analyzer 471. The feature clustering part 473 may classify the speech type of the speaker by assigning a weight to each type item constituting the speech characteristic information. The feature clustering part 473 may classify the speech type of the speaker using an attention technique of a deep learning model.

The text mapper 474 may translate text converted into a first language into text in a second language. The text mapper 474 may map the text translated into the second language with the text in the first language. The text mapper 474 may map main expressions constituting the text in the first language to corresponding phrases in the second language. The text mapper 474 may map a speech type related to the main expressions constituting the text in the first language to phrases in the second language. This is for the purpose of applying the classified speech type to the phrases in the second language.

The speech synthesizer 475 may apply the speech type and speaker's tone classified by the feature clustering part 473 to the main expressions of the text translated into the second language in the text mapper 474 to generate synthetic speech.

The controller 470 may determine the speech characteristics of the user using one or more of the transmitted text data or the power spectrum 520.

Speech characteristics of a user may include the sex, pitch, tone, speech topic, speech rate, and voice volume of the user.

The controller 470 may obtain the frequency of the voice signal 510 and the amplitude corresponding to the frequency.

The controller 470 may determine the sex of the user who has uttered the voice using the frequency band of the power spectrum 470. For example, if the frequency band of the power spectrum 520 is within a preset first frequency band range, the controller 470 may determine that the user is male.

If the frequency band of the power spectrum 520 is within a preset second frequency band range, the controller 470 may determine that the user is female. Here, the second frequency band range may be higher than the first frequency band range.

The controller 470 may determine the pitch of voice using the frequency band of the power spectrum 520. For example, the controller 470 may determine the pitch of the voice based on the amplitude within a specific frequency band.

The controller 470 may determine the user's tone using the frequency band of the power spectrum 520. For example, the controller 470 may determine a frequency band with an amplitude equal to or greater than a certain level among the frequency bands of the power spectrum 520 as a main sound range of the user and determine this main sound range as the user's tone.

The controller 470 may determine the user's speech rate based on the number of syllables uttered per unit time from the converted text data.

The controller 470 may determine the topic of the user's speech using the Bag-Of-Word Model technique for the converted text data.

The Bag-Of-Word Model technique is a technique of extracting frequently used words based on the frequency of a word in a sentence. Specifically, the Bag-Of-Word Model technique is a technique of extracting unique words within a sentence and expressing the frequency of each extracted word as a vector to determine the features of the topic of speech. For example, if words such as "running" and "physical strength" appear frequently in text data, the controller 470 may classify the topic of the user's speech as exercise.

The controller 470 may determine the topic of the user's speech from the text data using a known text categorization technique. The controller 470 may extract keywords from the text data and determine the topic of the user's speech.

The controller 470 may determine the user's voice volume by considering amplitude information in the entire frequency band. For example, the controller 470 may determine the user's voice volume based on the average or weighted average of amplitudes in each frequency band of the power spectrum 470.

The communication interface 480 may communicate with an external server by wire or wirelessly. The communication interface 480 may communicate with the electronic device 100 by wire or wirelessly.

The database 490 may store speech in first language included in content. The database 490 may store synthetic speech in which speech in the first language has been converted into speech in the second language. The database 490 may store first text related to speech in the first language and second text in which the first text has been translated into the second language. The database 490 may store various learning models required for speech recognition.

Meanwhile, the controller 170 of the electronic device 100 illustrated in FIG. 2 may include the preprocessor 460 and the controller 470 illustrated in FIG. 4. That is, the controller 170 of the electronic device 100 may perform the functions of the preprocessor 460 and the controller 470.

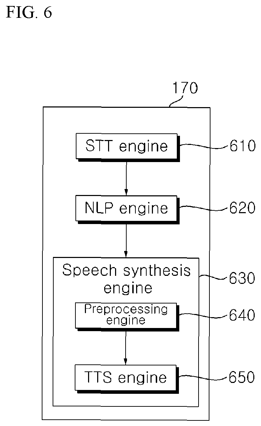

FIG. 6 is a block diagram illustrating a configuration of a controller for speech recognition and synthesis of an image display device according to an embodiment of the present disclosure.

That is, the speech recognition and synthesis process illustrated in FIG. 6 may be performed by the controller 170 of the electronic device 100 without using the server.

Referring to FIG. 6, the processor 170 of the electronic device 100 may include an STT engine 610, an NLP engine 620, and a speech synthesis engine 630. Each engine may be either hardware or software.

The STT engine 610 may perform the function of the STT server 420 of FIG. 5. That is, the STT engine 610 may convert audio data into text data.

The NLP engine 620 may perform the function of the NLP server 430 shown in FIG. 5. That is, the NLP engine 620 may obtain intent analysis information indicating the speaker's intention from the converted text data.

The speech synthesis engine 630 may perform a function of a speech synthesis server. The speech synthesis engine 630 may search a database for syllables or words related to given text data and synthesize a combination of the searched syllables or words to generate synthetic speech.

The speech synthesis engine 630 may include a preprocessing engine 631 and a TTS engine 632.

The preprocessing engine 631 may preprocess text data before generating synthetic speech. Specifically, the preprocessing engine 631 performs tokenization to divide text data into tokens, which are meaningful units. After performing tokenization, the preprocessing engine 631 may perform a cleansing operation to remove unnecessary characters and symbols to eliminate noise. Thereafter, the preprocessing engine 631 may generate the same word token by integrating word tokens with different expression methods. Thereafter, the preprocessing engine 631 may remove meaningless word tokens (stopwords).

The TTS engine 632 may synthesize speech related to the preprocessed text data and generate synthetic speech.

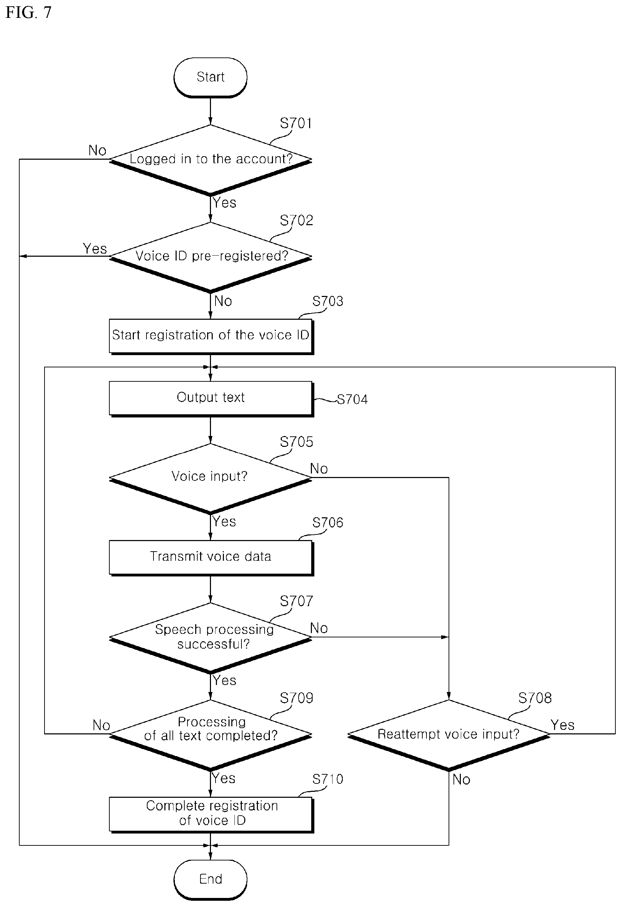

FIG. 7 is a flowchart of a method of operating an electronic device according to an embodiment of the present disclosure.

Referring to FIG. 7, the electronic device 100 may determine whether a user account is logged in to the server 400 in operation S701. For example, a user may log in to the server 400 with a user account by entering the user account ID and password.

According to an embodiment, when the user first logs in to the server 400 using the electronic device 100 with the user account, the electronic device 100 may include user identification information related to the user account in a user list. For example, in a case where three different user accounts log in to the server 400 using the electronic device 100, the user list stored in the electronic device 100 may include three different pieces of user identification information.

In operation S702, the electronic device 100 may determine whether voice-related identification information (hereinafter referred to as voice ID) is registered with respect to the user account logged in to the server 400. Here, the voice ID may include voiceprint information stored in the user identification server 440. For example, the server 400 may transmit information on whether a voice ID has been registered with respect to the user account logged in to the server 400 to the electronic device 100.

According to an embodiment, the server 400 may determine whether the voice ID has been registered based on whether voiceprint information has been mapped to user identification information, which is unique identification information related to the user account logged in to the server 400. Here, when the voice ID has not been registered with respect to the user account, the number of pieces of voiceprint information mapped to the user identification information may be 0.

According to an embodiment, the server 400 may determine that the voice ID has been registered if the number of pieces of voiceprint information mapped to the user identification information is two or more predetermined numbers and determine that the voice ID has not been registered if the number of pieces of voiceprint information is less than the predetermined numbers. For example, in the case of a user account for which a voice ID has been registered, six different pieces of voiceprint information may be mapped to user identification information. For example, in the case of a user account for which a voice ID has not been registered, five or fewer voiceprint information may be mapped to user identification information.

According to an embodiment, a flag value indicating whether a voice ID has been registered may be mapped to user identification information stored in the server 400. Here, user identification information to which a flag value is mapped may be stored in the user identification server 440 and/or the account server 450. The server 400 may determine whether the voice ID has been registered based on the flag value mapped to the user identification information. For example, a flag value mapped to user identification information may be 0 in the case of a user account for which a voice ID has not been registered, and a flag value mapped to user identification information may be 1 in the case of a user account for which a voice ID has been registered.

When the voice ID has not been registered with respect to the user account, the electronic device 100 may start a process of registering the voice ID in operation S703. For example, when starting the process of registering the voice ID, the electronic device 100 may transmit data containing the device identification information, the user identification information, a value indicating the start of registration of the voice ID, etc. to the server 400.

The electronic device 100 may output preset text in operation S704. The electronic device 100 may output any one of a plurality of pieces of preset text. For example, when the electronic device 100 is the image display device 100a, the electronic device 100 may output preset text through the display 180.

According to an embodiment, the server 400 may transmit any one of a plurality of pieces of preset text to the electronic device 100 in a preset order. Here, the electronic device 100 may output the preset text received from the server 400.

The electronic device 100 may determine whether speech with respect to the preset text is input in operation S705. For example, the electronic device 100 may determine whether speech is input through a microphone included in the input part 160 within a preset time. Here, the voice signal related to the speech input through the microphone may be transmitted to the controller 170 through the user input interface 150. For example, the electronic device 100 may determine whether data containing a voice signal related to speech uttered by the user is received from the remote control device 200 within a preset time.

When speech with respect to the preset text is input, the electronic device 100 may transmit audio data including the voice signal related to the speech to the server 400 in operation S706. Here, the electronic device 100 may transmit the device identification information, the user identification information, and a language code indicating the type of language to the server 400 along with the audio data.

The server 400 may convert the voice signal included in the audio data received from the electronic device 100 into text. The server 400 may determine whether the text converted from the voice signal and the preset text correspond to each other. For example, the server 400 may determine whether the text converted from the voice signal and the preset text correspond to each other based on the similarity therebetween.

The server 400 may generate voiceprint information related to the voice signal when the text converted from the voice signal and the preset text correspond to each other. The server 400 may map the voiceprint information generated with respect to the preset text to the user identification information and store the same. The server 400 may map the audio data received with respect to the preset text to the user identification information and store the same.

The electronic device 100 may determine whether speech processing for the preset text is successful based on the response received from the server 400 in operation S707. For example, if the text converted from the voice signal and the preset text correspond to each other, the server 400 may notify the electronic device 100 of success of speech processing. For example, when the voiceprint information related to the voice signal has been generated, the server 400 may notify the electronic device 100 of success of speech processing.

Meanwhile, in operation S708, the electronic device 100 may determine whether the user reattempts to input speech when speech with respect to the preset text is not input or when speech processing for the preset text fails. For example, the electronic device 100 may reattempt to input speech based on a user input from the user reattempting to input speech. Here, the electronic device 100 may output the preset text again.

In operation S709, if speech processing for the preset text is successful, the electronic device 100 may determine whether processing for all pieces of text is completed. For example, if all speech processing for six pieces of text is successful, processing for all pieces of text may be completed. Meanwhile, when processing for five pieces of preset text is completed, the electronic device 100 may output the last preset text.

The electronic device 100 may end the process of registering the voice ID when processing for all pieces of text is completed in operation S710. For example, when the electronic device 100 is the image display device 100a, the electronic device 100 may output a screen indicating completion of voice ID registration through the display 180. For example, the electronic device 100 may transmit data indicating completion of voice ID registration to the account server 450.

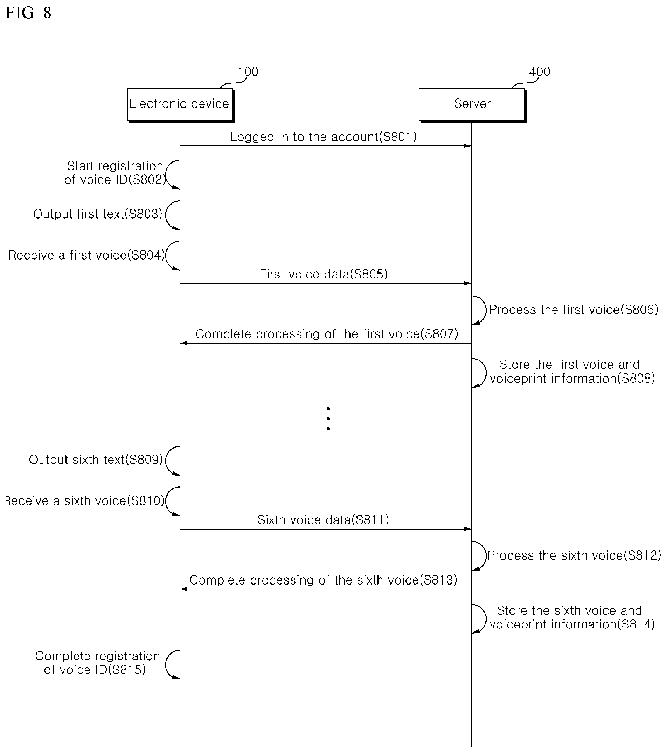

FIG. 8 is a flowchart of a method of operating a system according to an embodiment of the present disclosure.

Referring to FIG. 8, the electronic device 100 may log in to the server 400 using a user account in operation S801.

The electronic device 100 may start a process of registering a voice ID in operation S802.

The electronic device 100 may output first text among a plurality of pieces of preset text in operation S803.

The electronic device 100 may receive first speech for the first text in operation S804.

The electronic device 100 may transmit first audio data including a speech signal related to the first speech to the server 400 in operation S805.

The server 400 may process the first speech for the first text based on the first audio data received from the electronic device 100 in operation S806. The server 400 may convert the speech signal related to the first speech included in the first audio data received from the electronic device 100 into text. The server 400 may determine whether the text converted from the speech signal related to the first speech and the first text correspond to each other.

The server 400 may notify the electronic device 100 of completion of processing for the first speech in operation S807. For example, the server 400 may notify the electronic device 100 of success of processing for the first speech based on the fact that the text converted from the speech signal related to the first speech corresponds to the first text.

Further, the server 400 may generate first voiceprint information with respect to the first speech based on the speech signal related to the first speech based on the fact that the text converted from the speech signal related to the first speech corresponds to the first text.

The server 400 may store the first audio data and the first voiceprint information with respect to the first speech in operation S808. The server 400 may map the first audio data and first voiceprint information to the user identification information related to the logged-in user account and store the same.

The electronic device 100 may output the second to fifth pieces of text in stages. The electronic device 100 may sequentially receive second to fifth speeches related to the second to fifth pieces of text. The electronic device 100 may sequentially transmit second to fifth pieces of audio data related to the second to fifth speeches to the server 400.

The server 400 may process the second to fifth speeches based on the second to fifth pieces of audio data received from the electronic device 100. Additionally, the server 400 may sequentially generate and store second to fifth pieces of speech information related to the second to fifth speeches.

The electronic device 100 may output sixth text from among a plurality of pieces of preset text in operation S809.

The electronic device 100 may receive sixth speech with respect to the sixth text in operation S810.

The electronic device 100 may transmit sixth audio data including a speech signal related to the sixth speech to the server 400 in operation S811.

The server 400 may process the sixth speech with respect to the sixth text based on the sixth audio data received from the electronic device 100 in operation S812. The server 400 may convert a speech signal related to the sixth speech included in the sixth audio data received from the electronic device 100 into text. The server 400 may determine whether the text converted from the speech signal related to the sixth speech and the sixth text correspond to each other.

The server 400 may notify the electronic device 100 of completion of processing for the sixth speech in operation S813.

Meanwhile, when the text converted from the speech signal related to the sixth speech and the sixth text correspond to each other, the server 400 may generate sixth voiceprint information regarding the sixth speech based on the speech signal related to the sixth speech.

The server 400 may store the sixth audio data and the sixth voiceprint information regarding the sixth speech in operation S814. The server 400 may map the sixth audio data and the sixth voiceprint information to the user identification information related to the logged-in user account and store the same. Here, six different pieces of audio data and a plurality of pieces of voiceprint information may be mapped to the user identification information related to the logged-in user account.

The electronic device 100 may end the process of registering the voice ID in operation S815. For example, the electronic device 100 may end the process of registering the voice ID based on completion of processing for the six different pieces of preset text.

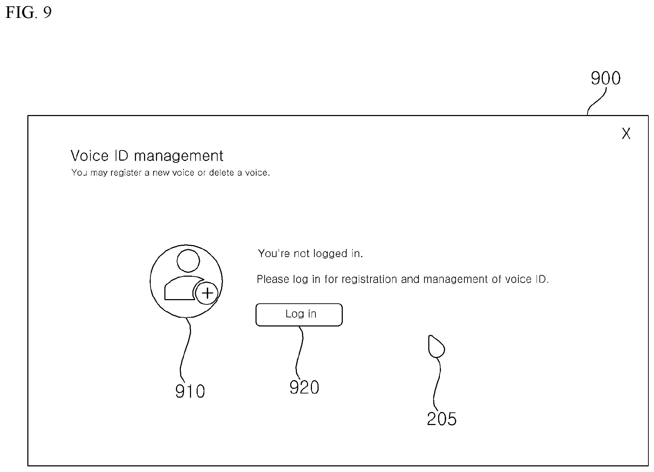

Referring to FIG. 9, if the user account is not logged in to the server 400, the electronic device 100 may output a login screen 900 related to logging in to the server 400 through the display 180. The login screen 900 may include an object 910 indicating a non-login state, and a login object 920 for executing login. When the user selects the login object 920 using a pointer 205 related to the remote control device 200, the electronic device 100 may output a screen for entering an ID and a password. Here, the user may log in to the server 400 with the user account by entering the ID and the password of the user account.

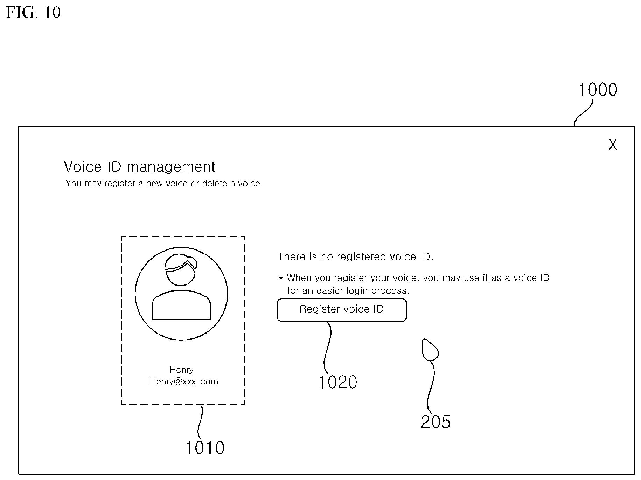

Referring to FIG. 10, when the voice ID has not been registered in the user account logged in to the server 400, the electronic device 100 may output a first account screen 1000 related to the user account for which the voice ID has not been registered. The first account screen 1000 may include an object 1010 indicating a logged-in user account, and an object 1020 regarding voice ID registration. When the user selects the object 1020 regarding voice ID registration using the pointer 205, the electronic device 100 may start the process of registering a voice ID.

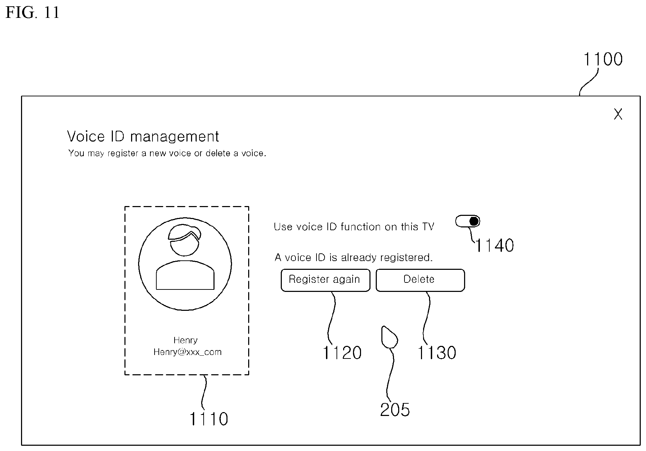

Referring to FIG. 11, when a voice ID has been registered in a user account logged in to the server 400, the electronic device 100 may display a second account screen 1100 related to the user account for which the voice ID has been registered. The second account screen 1100 may include an object 1110 indicating a logged-in user account, a re-registration object 1120 regarding voice ID re-registration, a deletion object 1130 regarding voice ID deletion, and an activation object 1140 regarding the use of a function related to voice ID. The user may select the activation object 1140 using the pointer 205 to activate or deactivate the use of a function related to voice ID.

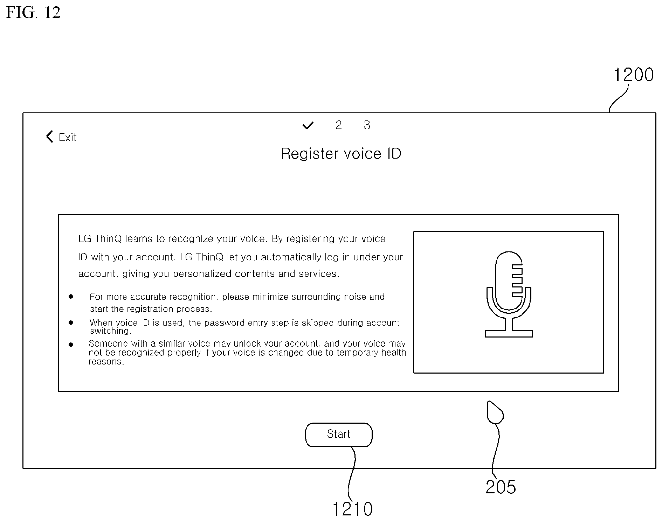

Referring to FIG. 12, when the object 1020 regarding voice ID registration is selected on the first account screen 1000, or when the re-registration object 1120 is selected on the second account screen 1100, the electronic device 100 may output a start screen 1200 for starting voice ID registration. When the user selects a start object 1210 using the pointer 205, the electronic device 100 may output a text screen for displaying preset text.

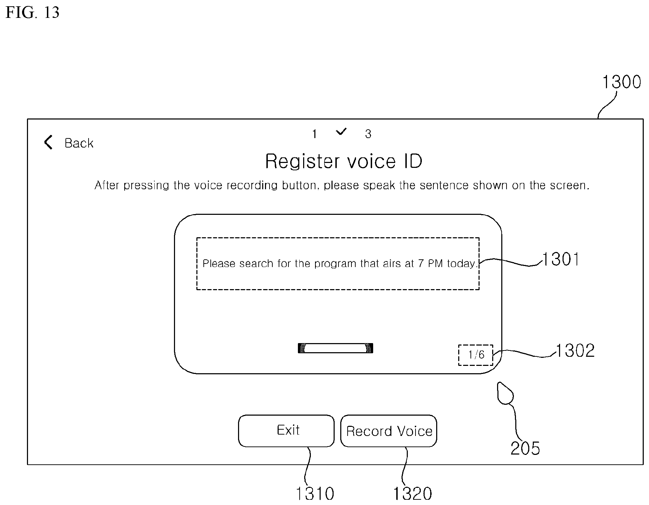

Referring to FIG. 13, the electronic device 100 may output a text screen 1300 for displaying any one of a plurality of pieces of preset text. The text screen 1300 may include preset text 1301, a text sequence number 1302, an end object 1310 for ending the process of registering a voice ID, and an input object 1320 for receiving speech.

When the user selects the end object 1310 using the pointer 205, the process of registering a voice ID may end. For example, when the process of registering a voice ID ends, all data stored in the server 400 while the process of registering a voice ID is in progress may be deleted.

When the user selects the input object 1320 using the pointer 205, the electronic device 100 may receive speech with respect to text.

According to an embodiment, when the user presses a predetermined button (e.g., a voice input button) included in the remote control device 200 while the text screen 1300 is displayed, the electronic device 100 may receive speech with respect to text based on the user input of pressing the predetermined button, received from the remote control device 200.

Meanwhile, according to an embodiment, when the user presses a predetermined button (e.g., the voice input button) included in the remote control device 200 while the process of registering a voice ID is in progress, the electronic device 100 may stop the process of registering a voice ID based on the user input of pressing the predetermined button, received from the remote control device 200. Here, the user input of pressing a predetermined button (e.g., the voice input button) included in the remote control device 200 may correspond to a user input of starting speech recognition for speech received through the remote control device 200. The electronic device 100 may perform an operation related to speech recognition on audio data including a speech signal received from the remote control device 200.

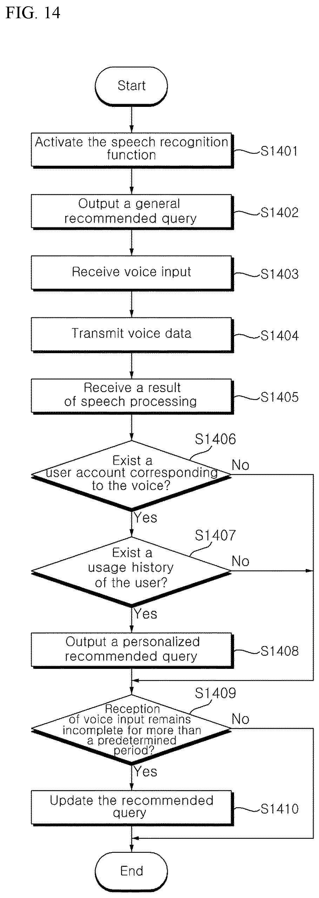

FIG. 14 is a flowchart of a method of operating an electronic device according to an embodiment of the present disclosure.

Referring to FIG. 14, in the S1401 step, the electronic device 100 may activate a speech recognition function. For example, if a signal corresponding to an input of pressing a predetermined button (e.g., a voice input button) is received from the remote control device 200, the electronic device 100 may activate the speech recognition function. For example, the electronic device 100 may activate the speech recognition function if an input that selects a predetermined object (e.g., a voice input object) displayed on the display 180 using the pointer 205 is received.

In the S1402 step, the electronic device 100 may output a general recommended query. Here, a general recommended query may refer to a query recommended for an ordinary user in relation to voice input. For example, the electronic device 100 may display a predetermined number of general recommended queries through the display 180.

The electronic device 100 may determine a general recommended query. For example, the electronic device 100 may select a predetermined number of general recommended queries from among a plurality of queries included in a preset query list.

In the S1403 step, the electronic device 100 may receive a voice input corresponding to the speech uttered by the user. For example, the electronic device 100 may receive a speech signal corresponding to the speech input from the remote control device 200.

In the S1404 step, the electronic device 100 may transmit to the server 400 the speech data containing the speech signal corresponding to the voice input. At this time, the electronic device 100 may transmit device identification information, a user list, a language code indicating the type of language, and others, along with the speech data to the server 400. For example, the electronic device 100 may transmit speech data containing voice signals in preset units, such as syllables or words, to the server 400. In other words, if the user utters a sentence, the electronic device 100 may transmit voice signals in preset units to the server 400 while the voice input corresponding to the sentence or phrase is being received from the remote control device 200.

In the S1405 step, the electronic device 100 may receive the result of processing the speech uttered by the user. Here, the speech processing result may include text corresponding to the speech or user identification information corresponding to the voice. For example, if the electronic device 100 transmits the voice data to the server 400, the STT server 420 of the server 400 may convert the speech signal into text and transmit the text to the electronic device 100. At this time, the electronic device 100 may display the text corresponding to the voice input, which is received from the server 400, on the display 180.

The server 400 may generate voiceprint information for the voice input to the electronic device 100 based on the voice data received from the electronic device 100. The server 400 may search its database for voiceprint information (hereinafter referred to as candidate voiceprint information) corresponding to user identification information included in the user list received from the electronic device 100. The server 400 may determine whether the newly generated voiceprint information matches any of the candidate voiceprints. The server 400 may determine the user identification information mapped to the candidate voiceprint information corresponding to the generated voiceprint information to be the user identification information corresponding to the voice input to the electronic device 100. Meanwhile, if no candidate voiceprint matches the generated voiceprint information, the server 400 may determine that no user identification information matches the voice input to the electronic device 100.

In the S1406 step, the electronic device 100 may determine whether a user account corresponding to the voice exists. For example, the electronic device 100 may confirm the user account corresponding to the voice based on the user identification information corresponding to the voice received from the server 400.

In the S1407 step, the electronic device 100 may determine whether there is any usage history for the user account corresponding to the voice. For example, the electronic device 100 may obtain the usage history related to the user account corresponding to the voice from the usage history stored in the storage 140.

In the S1408 step, if a usage history exists for the user, the electronic device 100 may output a personalized recommended query. A personalized recommended query may refer to a query recommended for a specific user in relation to voice input, based on the usage history of the specific user. For example, the electronic device 100 may replace the general recommended query displayed on the display 180 with a personalized recommended query.

The electronic device 100 may determine the personalized recommended query based on the user's usage history. Here, the usage history may include the user's history of searching for contents, viewing contents, running applications, and providing voice inputs while the user is logged into the server 400 through the user account, as well as the content genres preferred by the user.

For example, the electronic device 100 may generate a personalized recommended query corresponding to the execution of a specific application, based on the user's history of running the specific application. At this time, the electronic device 100 may determine the target application for the personalized recommended query based on the factors such as the frequency of using the application and the date and time of the application's execution.

For example, based on the user's history of watching specific contents, the electronic device 100 may generate a personalized recommended query corresponding to the search of the specific contents. At this time, the electronic device 100 may determine the target contents for the personalized recommended query based on factors such as the frequency of the user's watching the contents and the date and time of the user's watching the contents.

In the S1409 step, the electronic device 100 may determine whether the reception of voice input has remained incomplete for more than a predetermined period. For example, if reception of a signal corresponding to the user's pressing a specific button (e.g., a voice input button) from the remote control device 200 ends, the electronic device 100 may determine that the reception of the voice input has been completed. For example, if the microphone of the input part 160 does not receive any voice signal for more than a preset input time, the electronic device 100 may determine that the reception of the voice input has been completed.

Once the reception of the voice input is completed, the electronic device 100 may obtain the result of performing intent analysis on the received voice input. For example, the electronic device 100 may request the server 400 to perform intent analysis on the voice input. The NLP server 430 of the server 400 may perform intent analysis on the text corresponding to the voice input converted by the STT server 420. The server 400 may transmit the intent analysis result to the electronic device 100. Here, the intent analysis result may include keywords contained in the voice input, grammatical structure of the keywords, the intent of the sentence, and commands corresponding to the voice input. For example, the electronic device 100 may obtain the intent analysis result by performing intent analysis on the text corresponding to the voice input converted by the STT engine 810 using the NLP engine 820 included in the controller 170.

In the S1410 step, if the reception of voice input remains incomplete for more than a predetermined period, the electronic device 100 may update the recommended queries displayed on the display 180. For example, the electronic device 100 may replace a first recommended query displayed on the display 180 with a second recommended query. For example, the electronic device 100 may display the second recommended query along with the first recommended query displayed on the display 180. Meanwhile, until the reception of voice input is completed, the electronic device 100 may periodically update the recommended queries displayed on the display 180.

As described above, by processing voice signals in preset units, such as syllables or words, received while the user is speaking, and updating the recommended queries accordingly, the electronic device 100 may provide recommended queries optimized for the user who uses voice input.

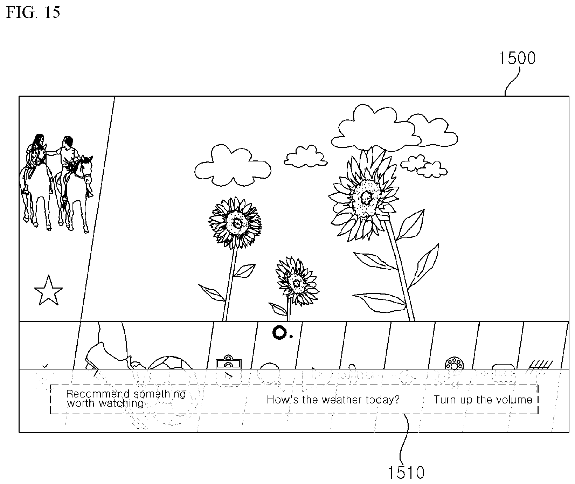

FIGS. 15 to 19 are diagrams referenced in description of provision of a recommended query according to embodiments of the present disclosure.

Referring to FIG. 15, the electronic device 100 may output a first screen 1500. The first screen 1500 may be a home screen displayed on the display 180 of the electronic device 100.

When the speech recognition function is activated, the electronic device 100 may output a general recommended query 1510. The electronic device 100 may display the general recommended query 1510 in one area of the first screen 1500 displayed on the display 180.

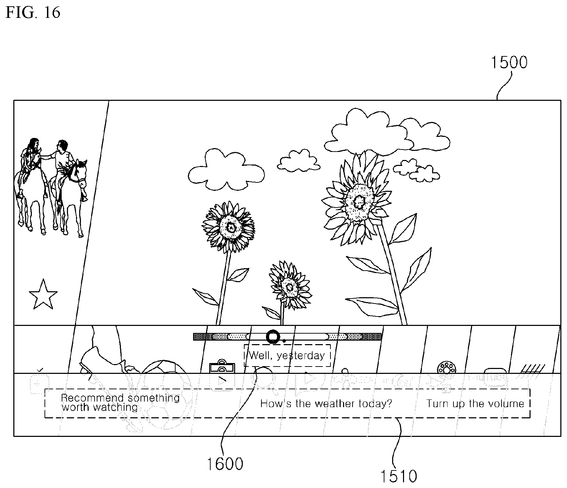

Referring to FIG. 16, the electronic device 100 may receive voice input from the user while the speech recognition function is active. Upon receiving the voice input of the user, the electronic device 100 may transmit voice data, which includes the voice signal corresponding to the voice input, to the server 400. The electronic device 100 may receive, from the server 400, the result obtained by processing the utterance from the user.

Based on the result of processing the user's utterance, which is received from the server 400, the electronic device 100 may output text 1600 corresponding to the user's voice input.

If a user account corresponding to the voice exists, the electronic device 100 may obtain a usage history related to the user of the user account corresponding to the voice, based on the result of processing the user's utterance received from the server 400. The electronic device 100 may generate a personalized recommended query based on the user's usage history.

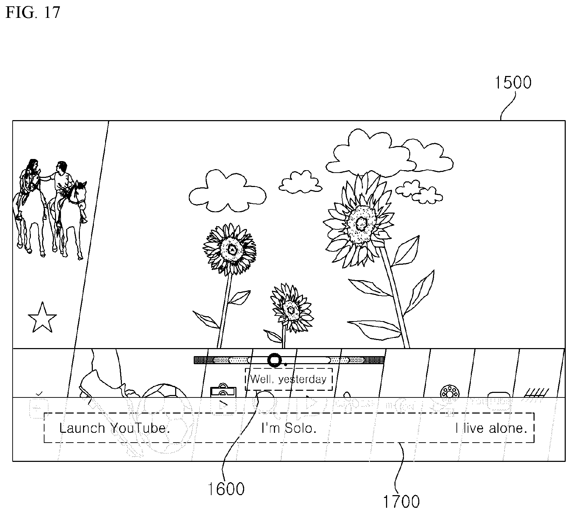

Referring to FIG. 17, the electronic device 100 may replace the general recommended query 1510, which is displayed on the display 180, with a first personalized recommended query 1700. The first personalized recommended query 1700 may include a recommended query corresponding to running a specific application, a recommended query corresponding to the search of specific contents, or the like.

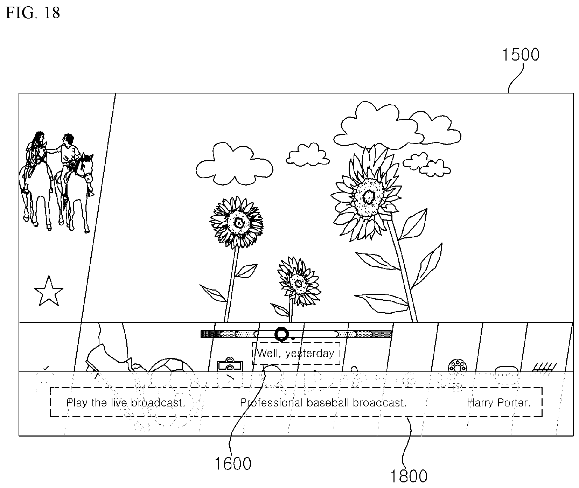

Referring to FIG. 18, if reception of voice input remains incomplete for more than a predetermined period, the electronic device 100 may replace the first personalized recommended query 1700 with the second personalized recommended query 1800.

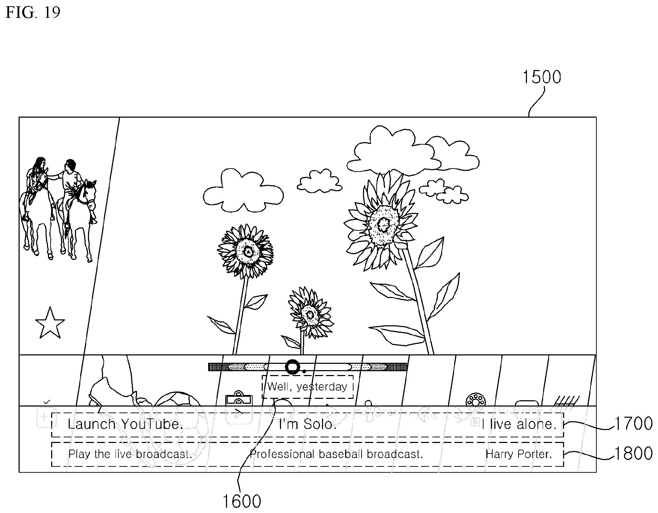

Meanwhile, referring to FIG. 19, if reception of voice input remains incomplete for more than a predetermined period, the electronic device 100 may output the second personalized recommended query 1800 along with the first personalized recommended query 1700.

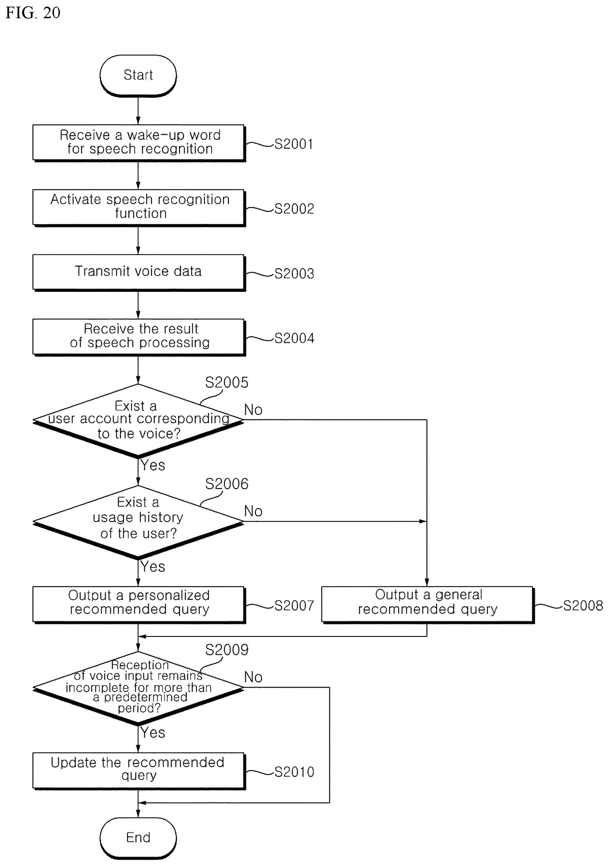

FIG. 20 is a flowchart of a method of operating an electronic device according to another embodiment of the present disclosure. Descriptions overlapping with those provided with reference to FIG. 14 will be omitted.

Referring to FIG. 20, in the S2001 step, the electronic device 100 may receive a wake-up word for activating speech recognition. For example, the electronic device 100 may determine whether the voice signal corresponding to the voice input through the microphone of the input part 160 matches the wake-up word for activating speech recognition.

In the S2002 step, based on receiving the wake-up word for activating speech recognition, the electronic device 100 may activate the speech recognition function.

In the S2003 step, the electronic device 100 may transmit voice data containing the voice signal corresponding to the wake-up word to the server 400. At this time, the electronic device 100 may also transmit device identification information, a user list, and a language code (indicating the type of language) to the server 400, along with the voice data.

In the S2004 step, the electronic device 100 may receive the result of processing the user's utterance. For example, the electronic device 100 may receive user identification information corresponding to the speech that includes the user's spoken wake-up word.

In the S2005 step, the electronic device 100 determines whether a user account corresponding to the voice exists.

In the S2006 step, the electronic device 100 may determine whether a usage history exists for the user corresponding to the user account corresponding to the voice.

In the S2007 step, if a usage history exists for the user, the electronic device 100 may output a personalized recommended query.

Meanwhile, in the S2008 step, if no user account corresponds to the voice, or if no usage history exists for the user, the electronic device 100 may output a general recommended query.

In the S2009 step, the electronic device 100 may determine whether reception of voice input remains incomplete for more than a predetermined period.

In the S2010 step, if reception of the voice input has been incomplete for more than a predetermined period, the electronic device 100 may update the recommended query being displayed on the display 180.

As described above, by using a wake-up word for activating speech recognition to update the recommended query, the electronic device 100 may provide recommended queries optimized for the user who uses voice input.

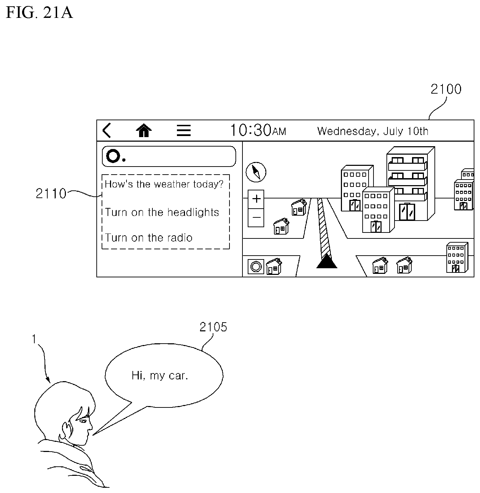

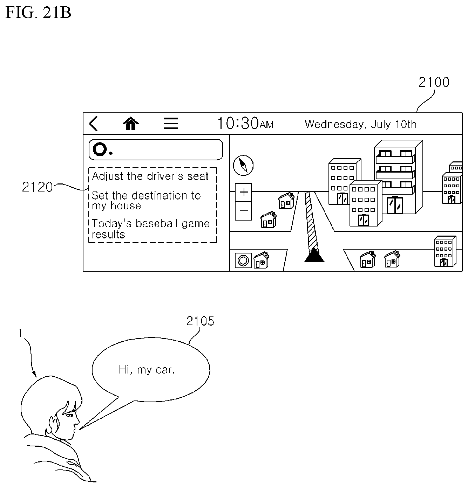

FIGS. 21a and 21b are diagrams referenced in description of provision of a recommended query according to embodiments of the present disclosure. FIGS. 21a and 21b assume that the electronic device 100 is a vehicle 100f.

Referring to FIG. 21a, the electronic device 100 may display a second screen 2100 through the display 180. The second screen 2100 may be an infotainment screen displayed on the display 180 of the electronic device 100.

The user 1 may utter the preset wake-up word "Hi, my car" 2105. At this time, the electronic device 100 may activate the speech recognition function based on reception of the preset wake-up word.

If there is no user account corresponding to user 1, who has uttered the preset wake-up word "Hi, my car" 2105, or if there is no usage history for the user 1, the electronic device 100 may output a general recommended query 2110. The electronic device 100 may display the general recommended query 2110 in one area of the second screen 2100 displayed on the display 180.

Meanwhile, referring to FIG. 21b, if there exists a user account corresponding to user 1, who has uttered the preset wake-up word "Hi, my car" 2105, and the user 1 has an existing usage history, the electronic device 100 may output a personalized recommended query 2120 based on the user's usage history. The personalized recommended query 2120 may include a recommended query corresponding to a setting value configured for the user account of the user 1, a recommended query corresponding to a navigation destination set by the user 1, and a recommended query corresponding to a previously uttered voice command.

As described above, according to at least one embodiment of the present disclosure, identification information for the user's voice may be registered to the user's account.

Also, according to at least one embodiment of the present disclosure, a user may be identified based on the user's voice.

Also, according to at least one embodiment of the present disclosure, a recommended query optimized for the account of the user identified based on the user's voice may be provided.

Referring to FIGS. 1 to 21b, an electronic device 100 according to one aspect of the present disclosure may comprise a display 180; a memory 140 that stores a usage history; a user input interface 150 that transmits signals corresponding to user inputs; and a controller 170, wherein the controller 170 checks the user account corresponding to a voice signal when the voice signal is received through the user input interface 150, determines whether the usage history for the user account is stored in the memory 140, outputs a preset first recommended query through the display 180 when the user account does not exist or the usage history for the user account does not exists in the memory 140, and outputs a second recommended query corresponding to the usage history for the user account through the display 180 when the usage history for the user account is stored in the memory 140.

Also, according to one aspect of the present disclosure, the voice signal may correspond to a wake-up word for activating a speech recognition function, wherein the controller 170 activates the speech recognition function based on reception of the voice signal and display either of the first recommended query and the second recommended query on the display 180 based on activation of the speech recognition function.

Also, according to one aspect of the present disclosure, the controller 170 may activate the speech recognition function based on a predetermined user input received through the user input interface 150, output the first recommended query through the display 180 based on activation of the speech recognition function, and replace the first recommended query displayed on the display 180 with the second recommended query when the usage history for the user account corresponding to the voice signal received while the speech recognition function is activated is stored in the memory 140.

Also, according to one aspect of the present disclosure, when the voice signal corresponding to a preset unit, the controller 170 may check the user account corresponding to the voice signal based on the voice signal in the preset unit and replace the first recommended query with the second recommended query before reception of voice input corresponding to the voice signal is completed.

Also, according to one aspect of the present disclosure, when reception of voice input corresponding to the voice signal remains incomplete for more than a predetermined period, the controller 170 may update one of the first recommended query and the second recommended query being displayed through the display 180.

Also, according to one aspect of the present disclosure, when the first recommended query is being displayed through the display 180, the controller 170 may change the first recommended query to a preset third recommended query different from the first recommended query and, when the second recommended query is being displayed through the display 180, change the second recommended query to a fourth recommended query being different from the second recommended query and corresponding to the usage history of the user account.

Also, according to one aspect of the present disclosure, when the first recommended query is being displayed through the display 180, the controller 170 may output, along with the first recommended query, a preset third recommended query different from the first recommended query and, when the second recommended query is being displayed through the display 180, output, along with the second recommended query, a fourth recommended query being different from the second recommended query and corresponding to the usage history of the user account.

Also, according to one aspect of the present disclosure, the electronic device 100 may further include a network interface 135 configured to communicate with a server 400, wherein the memory 140 may store a user list that includes at least one piece of user identification information corresponding to a user account with a login history in the server 400, and the controller 170 may transmit the user list, along with the data containing the voice signal, to the server 400, and determine the user account corresponding to the voice signal based on the user identification information corresponding to the voice signal received from the server 400.

A system 10 according to one embodiment of the present disclosure may comprise an electronic device 100 and a server 400, wherein the electronic device 100 transmits data that includes a voice signal to the server 400 when the voice signal is received through a user input interface 150, checks a user account corresponding to the voice signal based on a result of processing the voice signal received from the server 400, determines whether a usage history for the user account is stored in a memory 140, outputs a preset first recommended query through the display 180 when the user account does not exist or the usage history for the user account does not exists in the memory 140, and outputs a second recommended query corresponding to the usage history for the user account through the display 180 when the usage history for the user account is stored in the memory 140, wherein the server 400 generates identification information for the voice signal that includes data received from the electronic device 100, determines predetermined identification information corresponding to the identification information of the voice signal from identification information mapped to user identification information corresponding to a user account, which is stored in a database 490 of the server 400, and transmits to the electronic device 100 the result of processing the voice signal that includes predetermined user identification information mapped to the predetermined identification information.

Also, according to one aspect of the present disclosure, the voice signal may correspond to a wake-up word for activating a speech recognition function, wherein the electronic device 100 activates the speech recognition function based on reception of the voice signal and display either of the first recommended query and the second recommended query on the display 180 based on activation of the speech recognition function.

Also, according to one aspect of the present disclosure, the electronic device 100 may activate the speech recognition function based on a predetermined user input received through the user input interface 150, outputs the first recommended query through the display 180 based on activation of the speech recognition function, and replace the first recommended query displayed on the display 180 with the second recommended query when the usage history for the user account corresponding to the voice signal received while the speech recognition function is activated.

Also, according to one aspect of the present disclosure, when the voice signal corresponding to a preset unit, the electronic device 100 may check the user account corresponding to the voice signal based on the voice signal in the preset unit and replace the first recommended query with the second recommended query before reception of voice input corresponding to the voice signal is completed.

Also, according to one aspect of the present disclosure, when reception of voice input corresponding to the voice signal remains incomplete for more than a predetermined period, the electronic device 100 may update one of the first recommended query and the second recommended query being displayed through the display 180.

Also, according to one aspect of the present disclosure, when the first recommended query is being displayed through the display 180, the electronic device 100 may change the first recommended query to a preset third recommended query different from the first recommended query and, when the second recommended query is being displayed through the display 180, change the second recommended query to a fourth recommended query being different from the second recommended query and corresponding to the usage history of the user account.

Also, according to one aspect of the present disclosure, when the first recommended query is being displayed through the display 180, the electronic device 100 may output, along with the first recommended query, a preset third recommended query different from the first recommended query and, when the second recommended query is being displayed through the display 180, output, along with the second recommended query, a fourth recommended query being different from the second recommended query and corresponding to the usage history of the user account.

The attached drawings are only for easy understanding of the embodiments disclosed in this specification, and the technical idea disclosed in this specification is not limited by the attached drawings, and all changes, equivalents, and changes included in the technical scope of the present disclosure are not limited thereby.

Meanwhile, the operating method of the present disclosure may be implemented as processor-readable code on a processor-readable recording medium. Processor-readable recording media include all types of recording devices that store data that may be read by a processor. Examples of processor-readable recording media include a ROM, a RAM, a CD-ROM, a magnetic tape, a floppy disk, and an optical data storage device, and also include those implemented in the form of a carrier wave, such as transmission through the Internet. Additionally, a processor-readable recording medium is distributed in a computer system connected to a network, and thus processor-readable code may be stored and executed in a distributed manner.

Throughout the document, preferred embodiments of the present disclosure have been described with reference to appended drawings, however, the present disclosure is not limited to the embodiments above. Rather, it should be noted that various modifications of the present disclosure may be made by those skilled in the art to which the present disclosure belongs without leaving the technical scope of the present disclosure defined by the appended claims, and these modifications should not be understood individually from the technical principles or perspectives of the present disclosure.

**Claims**

1. An electronic device (100) comprising:

   a display (180);
   a memory (140) configured to store a usage history;
   a user input interface (150) configured to transmit signals corresponding to user inputs; and
   a controller (170) configured to:
   check a user account corresponding to a voice signal when the voice signal is received through the user input interface (150),
   determine whether a usage history for the user account is stored in the memory (140),
   output a preset first recommended query through the display (180) when the user account does not exist or the usage history for the user account is not stored in the memory (140), and
   output a second recommended query corresponding to the usage history for the user account through the display (180) when the usage history for the user account is stored in the memory (140).

2. The electronic device (100) of claim 1, wherein the voice signal corresponds to a wake-up word for activating a speech recognition function,
   wherein the controller (170) is configured to:

   activate the speech recognition function based on reception of the voice signal, and
   display either of the first recommended query and the second recommended query on the display (180) based on activation of the speech recognition function.

3. The electronic device (100) of claim 1, wherein the controller (170) is configured to:

   activate the speech recognition function based on a predetermined user input received through the user input interface (150),
   output the first recommended query through the display (180) based on activation of the speech recognition function, and
   replace the first recommended query displayed on the display (180) with the second recommended query when the usage history for the user account corresponding to the voice signal received while the speech recognition function is activated is stored in the memory (140).

4. The electronic device (100) of claim 3, wherein the controller (170) is configured to:

   when the voice signal corresponding to a preset unit, check the user account corresponding to the voice signal based on the voice signal in the preset unit, and
   replace the first recommended query with the second recommended query before reception of voice input corresponding to the voice signal is completed.

5. The electronic device (100) of claim 1, wherein, when reception of voice input corresponding to the voice signal remains incomplete for more than a predetermined period, the controller (170) is configured to update one of the first recommended query and the second recommended query being displayed through the display (180).

6. The electronic device (100) of claim 5, wherein the controller (170) is configured to:

   when the first recommended query is being displayed through the display (180), change the first recommended query to a preset third recommended query different from the first recommended query, and
when the second recommended query is being displayed through the display (180), change the second recommended query to a fourth recommended query being different from the second recommended query and corresponding to the usage history of the user account.

7. The electronic device (100) of claim 5, wherein the controller (170) is configured to:

when the first recommended query is being displayed through the display (180), output, along with the first recommended query, a preset third recommended query different from the first recommended query and,
when the second recommended query is being displayed through the display (180), output, along with the second recommended query, a fourth recommended query being different from the second recommended query and corresponding to the usage history of the user account.

8. The electronic device (100) of claim 1, further comprising:

a network interface (135) configured to communicate with a server (400),
wherein the memory (140) is configured to store a user list that includes at least one piece of user identification information corresponding to a user account with a login history in the server (400), and
wherein the controller (170) is configured to:

transmit the user list, along with the data containing the voice signal, to the server (400), and
determine the user account corresponding to the voice signal based on the user identification information corresponding to the voice signal received from the server (400).

9. A system comprising:

an electronic device (100) and a server (400),
wherein the electronic device (100) is configured to:

transmit data that includes a voice signal to the server (400) when the voice signal is received through a user input interface (150) of the electronic device (100),
check a user account corresponding to the voice signal based on a result of processing the voice signal received from the server (400),
determine whether a usage history for the user account is stored in a memory (140) of the electronic device (100),
output a preset first recommended query through a display (180) of the electronic device (100) when the user account does not exist or the usage history for the user account is not stored in the memory (140), and
output a second recommended query corresponding to the usage history for the user account through the display (180) when the usage history for the user account is stored in the memory (140),
wherein the server (400) is configured to:

generate identification information for the voice signal that includes data received from the electronic device (100),
determine predetermined identification information corresponding to the identification information of the voice signal from identification information mapped to user identification information corresponding to a user account, which is stored in a database of the server (400), and
transmit to the electronic device (100) the result of processing the voice signal that includes predetermined user identification information mapped to the predetermined identification information.

10. The system of claim 9, wherein the voice signal corresponds to a wake-up word for activating a speech recognition function,
wherein the electronic device (100) is configured to:

activate the speech recognition function based on reception of the voice signal and
display either of the first recommended query and the second recommended query on the display (180) based on activation of the speech recognition function.

11. The system of claim 9, wherein the electronic device (100) is configured to:

activate the speech recognition function based on a predetermined user input received through the user input interface (150),
output the first recommended query through the display (180) based on activation of the speech recognition function, and
replace the first recommended query displayed on the display (180) with the second recommended query when the usage history for the user account corresponding to the voice signal received while the speech recognition function is activated.

12. The system of claim 11, wherein the electronic device (100) is configured to:

when the voice signal corresponding to a preset unit, check the user account corresponding to the voice signal based on the voice signal in the preset unit, and
replace the first recommended query with the second recommended query before reception of voice input corresponding to the voice signal is completed.

13. The system of claim 9, wherein, when reception of voice input corresponding to the voice signal remains incomplete for more than a predetermined period, the electronic device (100) is configured to: update one of the first recommended query and the second recommended query being displayed through the display (180).

14. The system of claim 13, wherein the electronic device (100) is configured to:

when the first recommended query is being displayed through the display (180), change the first recommended query to a preset third recommended query different from the first recommended query and,
when the second recommended query is being displayed through the display (180), change the second recommended query to a fourth recommended query being different from the second recommended query and corresponding to the usage history of the user account.

15. The system of claim 13, wherein the electronic device (100) is configured to:

when the first recommended query is being displayed through the display (180), output, along with the first recommended query, a preset third recommended query different from the first recommended query and,
when the second recommended query is being displayed through the display (180), output, along with the second recommended query, a fourth recommended query being different from the second recommended query and corresponding to the usage history of the user account.

FIG. 1

FIG. 2

**EP 4 708 023 A1**

FIG. 3

**23**

FIG. 4

400

460 — Preprocessor
461 — Waver processor
462 — Frequency processor
463 — Power spectrum processor
464 — STT converter

470 — Controller
471 — Speech analyzer
473 — Feature clustering part
475 — Speech synthesizer
472 — Text analyzer
474 — Text mapper

480 — Communication interface
490 — Database

FIG. 5

FIG. 6

FIG. 7

FIG. 8

Logged in to the account(S801)

Start registration of voice ID(S802)

Output first text(S803)

Receive a first voice(S804)

First voice data(S805)

Process the first voice(S806)

Complete processing of the first voice(S807)

Store the first voice and voiceprint information(S808)

Output sixth text(S809)

Receive a sixth voice(S810)

Sixth voice data(S811)

Process the sixth voice(S812)

Complete processing of the sixth voice(S813)

Store the sixth voice and voiceprint information(S814)

Complete registration of voice ID(S815)

FIG. 9

900

X

Voice ID management
You may register a new voice or delete a voice.

You're not logged in.

Please log in for registration and management of voice ID.

Log in

910

920

205

FIG. 10

1000

Voice ID management
You may register a new voice or delete a voice.

Henry
Henry@xxx_com

1010

There is no registered voice ID.

\* When you register your voice, you may use it as a voice ID
for an easier login process.

Register voice ID

1020

205

FIG. 11

1100

Voice ID management
You may register a new voice or delete a voice.

Henry
Henry@xxx_com

1110

Use voice ID function on this TV

1140

A voice ID is already registered.

Register again     Delete

1120     1130

205

FIG. 12

1200

‹ Exit

✓   2   3

Register voice ID

LG ThinQ learns to recognize your voice. By registering your voice ID with your account, LG ThinQ let you automatically log in under your account, giving you personalized contents and services.

- For more accurate recognition, please minimize surrounding noise and start the registration process.
- When voice ID is used, the password entry step is skipped during account switching.
- Someone with a similar voice may unlock your account, and your voice may not be recognized properly if your voice is changed due to temporary health reasons.

Start

205

1210

FIG. 13

1300

1 ✓ 3

〈 Back

# Register voice ID

After pressing the voice recording button, please speak the sentence shown on the screen.

Please search for the program that airs at 7 PM today. ⎯1301

1/6 ⎯1302

205

| Exit | Record Voice |

1310        1320

FIG. 14

Start

Activate the speech recognition
function — S1401

Output a general
recommended query — S1402

Receive voice input — S1403

Transmit voice data — S1404

Receive a result
of speech processing — S1405

S1406
Exist a
user account corresponding
to the voice? — No

Yes

S1407
Exist a
usage history
of the user? — No

Yes

Output a personalized
recommended query — S1408

S1409
Reception
of voice input remains
incomplete for more than
a predetermined
period? — No

Yes

Update the recommended
query — S1410

End

FIG. 15

FIG. 16

FIG. 17

FIG. 18

Play the live broadcast.     Professional baseball broadcast.     Harry Porter.

Well, yesterday

1500

1600

1800

FIG. 19

FIG. 20

```
                    ┌─────────┐
                    │  Start  │
                    └────┬────┘
                         │
         ┌───────────────▼───────────────┐
         │   Receive a wake-up word       │──── S2001
         │   for speech recognition       │
         └───────────────┬───────────────┘
                         │
         ┌───────────────▼───────────────┐
         │  Activate speech recognition   │──── S2002
         │          function              │
         └───────────────┬───────────────┘
                         │
         ┌───────────────▼───────────────┐
         │      Transmit voice data       │──── S2003
         └───────────────┬───────────────┘
                         │
         ┌───────────────▼───────────────┐
         │      Receive the result        │──── S2004
         │    of speech processing        │
         └───────────────┬───────────────┘
                         │           S2005
                    ┌────▼────┐
                    Exist a            No
           user account corresponding ─────────────┐
                  to the voice?                     │
                    └────┬────┘                     │
                         │Yes                       │
                         │           S2006          │
                    ┌────▼────┐                     │
                    Exist a            No           │
                  usage history ──────────────────┐ │
                   of the user?                   │ │
                    └────┬────┘                   │ │
                         │Yes                     │ │
         ┌───────────────▼───────────────┐        ▼ ▼
         │    Output a personalized       │   ┌──────────────────────┐
         │    recommended query           │   │  Output a general     │── S2008
         │          S2007                 │   │  recommended query    │
         └───────────────┬───────────────┘   └──────────┬───────────┘
                         │◄───────────────────────────────┘
                         │           S2009
                    ┌────▼────┐
                  Reception
          of voice input remains         No
        incomplete for more than ─────────────┐
            a predetermined                    │
                period?                        │
                    └────┬────┘                │
                         │Yes                  │
         ┌───────────────▼───────────────┐     │
         │   Update the recommended       │── S2010
         │          query                 │     │
         └───────────────┬───────────────┘     │
                         │◄─────────────────────┘
                    ┌────▼────┐
                    │   End   │
                    └─────────┘
```

FIG. 21A

FIG. 21B

**EUROPEAN SEARCH REPORT**

Application Number

EP 25 18 7480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/119930 A1 (JUNG EUN KYUNG [KR] ET AL) 11 April 2024 (2024-04-11) * figures 6A, 6B, 7 * * figure 3 * * paragraph [0120] - paragraph [0316] * * figures 19, 20 * | 1-15 | INV. G06F3/16 G10L15/22 ADD. G06F21/32 G10L17/00 |
| X | US 2020/380980 A1 (SHUM STEPHEN H [US] ET AL) 3 December 2020 (2020-12-03) | 1 | H04L67/306 |
| A | * figure 1 * * figures 10A-10H * * figures 7A-7C * * paragraph [0086] - paragraph [0393] * | 2-15 | |
| A | US 2020/168223 A1 (CHOI CHANHEE [KR]) 28 May 2020 (2020-05-28) * paragraph [0157] - paragraph [0158] * | 1-15 | |
| A | US 2019/371329 A1 (D'SOUZA SHAMAN [US] ET AL) 5 December 2019 (2019-12-05) * paragraph [0102] * | 1-15 | |
| A | CN 117 809 680 A (HISENSE VISUAL TECH CO LTD) 2 April 2024 (2024-04-02) * paragraph [0156] - paragraph [0594] * | 1-15 | TECHNICAL FIELDS SEARCHED (IPC) G06F G10L |

The present search report has been drawn up for all claims

| Place of search | Date of completion of the search | Examiner |
|---|---|---|
| Munich | 26 January 2026 | Müller, Achim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7480

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2026

| Patent document cited in search report | Publication date | Patent family member(s) | | Publication date |
|---|---|---|---|---|
| US 2024119930 A1 | 11-04-2024 | EP | 4350690 A1 | 10-04-2024 |
| | | KR | 20240048966 A | 16-04-2024 |
| | | US | 2024119930 A1 | 11-04-2024 |
| US 2020380980 A1 | 03-12-2020 | DK | 201970510 A1 | 11-02-2021 |
| | | DK | 201970511 A1 | 15-02-2021 |
| | | US | 2020380980 A1 | 03-12-2020 |
| | | US | 2021012776 A1 | 14-01-2021 |
| US 2020168223 A1 | 28-05-2020 | EP | 3850621 A1 | 21-07-2021 |
| | | KR | 20200063521 A | 05-06-2020 |
| | | US | 2020168223 A1 | 28-05-2020 |
| | | WO | 2020111919 A1 | 04-06-2020 |
| US 2019371329 A1 | 05-12-2019 | US | 10332513 B1 | 25-06-2019 |
| | | US | 2019371329 A1 | 05-12-2019 |
| | | US | 2021104238 A1 | 08-04-2021 |
| CN 117809680 A | 02-04-2024 | NONE | | |

EPO FORM P0459